**Europäisches Patentamt**

**European Patent Office**

**Office européen des brevets**

(19)

(11) Veröffentlichungsnummer: **0 227 766**
**B1**

(12) # EUROPÄISCHE PATENTSCHRIFT

(45) Veröffentlichungstag der Patentschrift:
**18.10.89**

(51) Int. Cl.⁴: **G 01 J 3/433**

(21) Anmeldenummer: **86904153.3**

(22) Anmeldetag: **04.07.86**

(86) Internationale Anmeldenummer:
**PCT/EP 86/00395**

(87) Internationale Veröffentlichungsnummer:
**WO 87/00273 (15.01.87 Gazette 87/1)**

(54) **VERFAHREN ZUR SELEKTIVITÄTSVERBESSERUNG SPEKTROMETRISCHER MESSUNGEN, SOWIE VORRICHTUNG ZUR DURCHFÜHRUNG DES VERFAHRENS.**

(30) Priorität: **04.07.85 DE 3523874**

(43) Veröffentlichungstag der Anmeldung:
**08.07.87 Patentblatt 87/28**

(45) Bekanntmachung des Hinweises auf die Patenterteilung:
**18.10.89 Patentblatt 89/42**

(84) Benannte Vertragsstaaten:
**CH FR GB IT LI NL SE**

(56) Entgegenhaltungen:
**US-A- 2 834 246**
**US-A- 2 941 444**
**US-A- 3 740 144**
**US-A- 3 756 726**
**US-A- 4 090 792**
**US-A- 4 260 262**
**US-A- 4 521 687**

(73) Patentinhaber: **CAMMANN, Karl, Amalienstrasse 89, D-8000 München 40 (DE)**

(72) Erfinder: **CAMMANN, Karl, Amalienstrasse 89, D-8000 München 40 (DE)**

(74) Vertreter: **Popp, Eugen, Dr. et al, MEISSNER, BOLTE & PARTNER Widenmayerstrasse 48 Postfach 86 06 24, D-8000 München 86 (DE)**

## Beschreibung

Die Erfindung betrifft ein Verfahren nach dem Oberbegriff des Patentanspruches 1 sowie eine Vorrichtung nach dem Oberbegriff des Patentanspruches 3.

Ein wesentliches Problem bei allen spektrometrischen Messungen der eingangs genannten Art besteht darin, daß zum einen der Durchlaßbereich bekannter Filteranordnungen nur bis zu einer minimalen Breite eingeengt werden kann — und sowohl aus physikalischen, wie auch aus technischen Gründen —, zum anderen die durch ein sehr schmalbandiges Filter gelangende Energie, die nachfolgend in einem Detektor nachgewiesen werden soll, gering ist. Weiterhin sind bei spektrometrischen Messungen immer Untergrundsprobleme zu berücksichtigen. Hierbei dreht es sich im wesentlichen darum, daß nicht nur das von der Probe beeinflußte oder hervorgerufene Signal einen Betrag zum Meßergebnis liefert, sondern probenfremde Substanzen einen wesentlichen Signalbeitrag — eben den Untergrund — liefern. Schließlich sind auch die Meßanordnungen störungsbehaftet, d.h. zwischen Signalquelle und Detektor treten Störgrößen auf, die einen Beitrag zum Meßergebnis liefern. Alle diese Störgrößen gilt es so weit wie möglich auszuschalten.

Bei der optischem Emissionsspektroskopie, die eine wichtige Analysemethode zur Bestimmung von chemischen Elementen in allen möglichen Matrizes ist, verwendet man heute als Emissionsquelle ein Plasma, in dem die zu untersuchende Substanz zur Strahlung angeregt wird. Um eine besonders hohe Auflösung bei der Messung zu bekommen, verwendet man heute vielfach Monochromatoren, die aufgrund ihres Arbeitsprinzips voluminös, anfällig gegenüber Temperaturschwankungen und Erschütterungen sind. Für den Feldeinsatz eignen sich diese Geräte in keinem Fall. Schließlich sind die Geräte auch sehr teuer, so daß sich nur der intensive Laboreinsatz (durch mehrere Benutzer) lohnt. Dreht es sich z.B. darum, daß man eine optische Spektralanalyse nur für bestimmte Elemente durchführen will, die gegebenenfalls zuvor chromatographisch getrennt wurden, so benötigt man in vielen Fällen keinen solch aufwendigen Monochromator, der ja das ganze Spektrum analysierbar macht. Kompakte kleinere Chromatoren sind aber wesentlich weniger empfindlich und weisen auch eine schlechtere Auflösung auf. Für die klinisch angewandte Flammenphotometrie für Li, Na, K und Ca-Bestimmungen verwendet man feststehende Interferenzfilter, wobei diese jedoch eine sehr große Bandbreite bzw. Halbwertsbreite der Wellenlängendurchläßigkeit aufweisen (beste Interferenzfilter: 0,1 nm; Monochromator: 0,01 nm). Dadurch gelangt ein erheblicher Anteil des Kontinuumlichtes jeder Strahlungsquelle (Flammen- oder Plasma-Untergrund) auf den Detektor (Fotozelle oder Fotomultiplier), was die Selektivität und die Nachweisgrenze verschiebt. Die Nachweisgrenze wird insbesondere durch das Licht-Intensitätsverhältnis von Analyt-Linie Untergrundstrahlung bestimmt. Schwache Linien-Intensitäten, wie sie bei der Spurenanalyse (Umwelt-Spuren-Analytik) auftreten, lassen sich dann nicht mehr aus einer statistisch verteilten Untergrundintensität herausfiltern.

Ein wesentliches Problem bei Geräten mit feststehender Wellenlänge (auch aufwendige Monochromatoren) liegt darin, daß unter Umständen grobe Fehlmessungen vorkommen und unerkannt bleiben. Dies ist immer dann der Fall, wenn eine echte Probe zusammen mit Matrixstoffen eingeführt wird. Diese verändern dann den Untergrund der spektroskopischen Strahlungsquelle. Zur Abschätzung dieser Analysefehler kann man die Selektivität definieren:

$$\text{Selektivität} = \frac{\text{Signal/}\mu\text{mol Analyt}}{\text{Signal/}\mu\text{mol Fremdstoff}}$$

bei der betreffenden, fest eingestellten Wellenlänge.

Die Selektivität aufwendiger Monochromatoren ist in der Regel nicht besser als $10^3$. D.h., daß ein $10^3$-facher Überschuß eines Fremdstoffes (z.B. Na bei der klinischen Bestimmung von Li oder C bei der chromatographischen Halogenidbestimmung) einen Fehler von 100% verursacht.

Mit feststehenden Interferenzfiltern sind heutzutage nur Selektivitäten unter 100 und auch viel schlechtere Nachweisgrenzen erzielbar.

Bei absorptionsspektrometrischen Messungen ist es allgemein bekannt (US-A-2 834 246; US-A-3 740 144; US-A-4 260 262; US-A-4 090 792; US-A-3 756 726) den Filterdurchlaßbereich gegenüber der zu untersuchenden Strahlung periodisch zu verschieben und das Detektorausgangssignal über einen phasengesteuerten Verstärker weiterzuverarbeiten. Bei solchen absorptionspektrometrischen Messungen stimmen aber die Bandbreite, also der durchgelassene Wellenlängenbereich der Filter und die Bandbreite der zu untersuchenden Absorptionsprofile hinsichtlich ihrer Größenordnung überein. Üblich sind Filterbreiten von 1 nm gegenüber Absorptionsbandbreiten etwas unterhalb dieser Größenordnung. Bei emissionsspektroskopischen Messungen liegt die Bandbreite der Emissionslinie jedoch unter $10^{-3}$ nm, so daß die bei absorptionsspektrometrischen Messungen übliche Verfahrensweise nicht angebracht scheint.

Ausgehend vom oben genannten Stand der Technik, ist es Aufgabe der vorliegenden Erfindung, ein Verfahren zur Selektivitätsverbesserung emissionspektroskopischer Messungen aufzuzeigen, bei dem mit einfachen Mitteln größere Verbesserungen erzielbar sind.

Diese Aufgabe wird auf überraschende Weise dadurch gelöst, daß man eine Filteranordnung mit einer, zur Emissionslinie großen Bandbreite hinsichtlich ihres Durchlaßbereiches periodisch gegenüber dem zu untersuchenden Spektralbereich derart verschiebt (oder umgekehrt), daß das durch die Filteranordnung gelangende Spektralband über den zu untersuchenden Spektralbereich periodisch verschoben wird, und daß man das Detektorausgangssignal über einem phasenempfindlichen Gleichrichter zur Anzeige bringt, dessen Phasenreferenzsignal der Verschiebung proportional ist. Überraschenderweise hat sich durch diese Kombination von Maßnahmen eine Selektivitätssteigerung erzielen lassen, die im Gegensatz zu allem steht, was die Kenntnisse zur Problematik der absorptionsspektrometrischen Messungen vermuten ließen.

Durch die Erfindung wird eine extrem hohe Selektivität erzielt, selbst wenn die Filteranordnung eine geringe Güte aufweist. Es konnte in einem Versuch (Nachweis von Chlor) eine Selektivität von über $10^6$ mit einem handelsüblichen Interferenzfilter erzielt werden. Die erzielbare Selektivität liegt also in dem Bereich, der sonst nur mit sehr aufwendigen Apparaturen erzielbar ist.

Anstelle einer Verschiebung des Filter-Durchlaßbereichs ist es auch möglich, den zu untersuchenden Spektralbereich zu verschieben. Dies geht bei der Untersuchung im Wellenlängenbereich von Licht nur dann unter Zuhilfenahme von Doppelverschiebungseffekten, wenn es sich um sehr schmale Filter-Durchlaßbereiche handelt, da sonst die hohen Geschwindigkeiten zur Erzielung hinreichender Frequenzverschiebungen nur schwer erzielbar sind.

Bevorzugte Ausführungsformen der Erfindung sind in den abhängigen Ansprüchen aufgezeigt. Weitere erfindungswesentliche Merkmale ergeben sich aus den nachfolgenden Ausführungsbeispielen, die anhand von Abbildungen näher beschrieben sind. Hierbei zeigt:

Fig. 1 eine schematisierte Darstellung einer Anordnung zur Untersuchung von Lichtspektren,

Fig. 2 die Darstellung des sich aus der Drehung eines Interferenzfilters ergebenden Effektes,

Fig. 3 eine weitere bevorzugte Ausführungsform der Erfindung,

Fig. 4 eine Anordnung zur Untersuchung von Spektren in verschiedenen Bereichen, und

Fig. 5 eine Anordnung ähnlich der nach Fig. 1, jedoch mit einem elektrisch abstimmbaren Filter,

Fig. 6/7 Spektrogramme, die mit einer Anordnung gemäß Fig. 1 aufgenommen wurden.

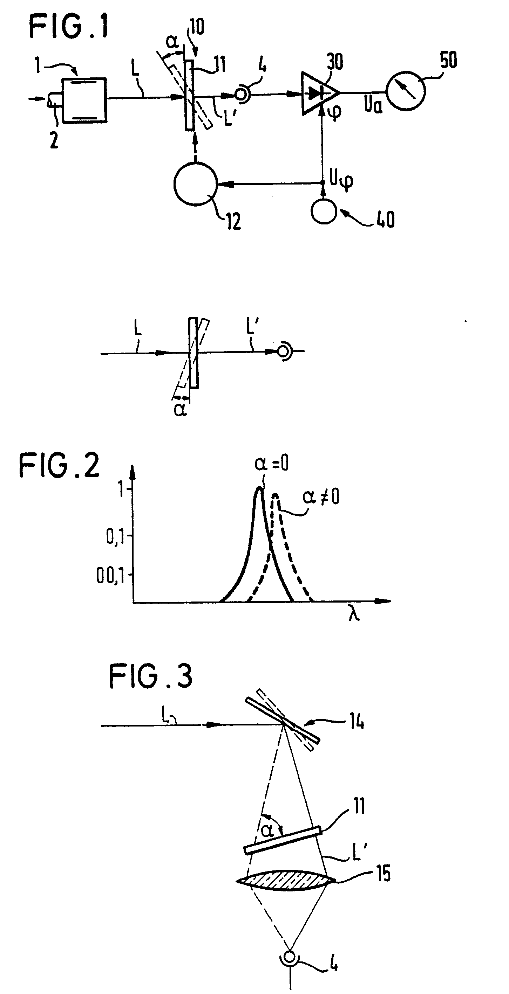

In Fig. 1 ist der prinzipielle Versuchsaufbau zur Durchführung des erfindungsgemäßen Verfahrens im Rahmen lichtspektroskopischer Untersuchungen aufgezeigt. Mit 1 ist hierbei die Lichtquelle bezeichnet, ein «Plasmabrenner», dem über einen Anschluß 2 ein Probengas zugeführt wird.

Der Quelle 1 ist eine geeignete optische Anordnung nachgeschaltet, so daß ein im wesentlichen paralleles Lichtbündel L erzeugt werden kann, das auf ein Interferenzfilter 11 fällt. Das Interferenzfilter 11 ist mit einem Motor 12 derart gekoppelt, daß das Filter 11 um einen Winkel α verschwenkt werden kann. Die Durchlaßkurve des Filters 11 ist — wie in Fig. 2 gezeigt — vom Auffallswinkel α bzw. vom Kippwinkel des Filters zum Lichtbündel L abhängig. Das aus der Filteranordnung 10 kommende Lichtbündel L' ist auf einen Detektor 4, z.B. einen gekühlten Fotovervielfacher gerichtet. Das Ausgangssignal des Detektors 4 wird auf den Eingang eines phasenempfindlichen Gleichrichters bzw. Lock-in-Verstärkers 30 geführt, dessen Ausgangssignal $U_a$ einer Messanordnung 50 zugeführt wird. Im allgemeinen verwendet man hier Schreiber, Anzeigeschirme oder dergleichen. Der Phaseneingang φ des Lock-in-Verstärkers 30 ist mit dem Ausgang eines Steuergenerators 40 verbunden, der ein Steuersigal $U\varphi$ liefert. Der Steuergenerator 40 kann auch Bestandteil eines handelsüblichen Lock-in-Verstärkers 30 sein. Weiterhin ist das Phasensignal $U\varphi$ auf den Eingang des Motors 12 geführt, so daß auf dem Phaseneingang φ ein Signal liegt, das dem Verschwenkungswinkel α proportional ist (oder der Motor liefert selbst das Referenzsignal für den Lock-in). Da wiederum die Lage der Filterdurchlaßkurve proportional dem Winkel α ist, wird so die Verstärkung des Lock-in-Verstärkers 30 proportional der Lage des Filterdurchlaßbereiches verändert.

Es ist in der in Fig. 1 gezeigten Anordnung auch möglich, anstelle einer Linsenanordnung eine (wesentlich einfachere und kostengünstigere) Lichtleiteranordnung zu verwenden, wenn man die Lichtleiteraustrittsfläche nahe genug an das Filter 11 heranführt, so daß das Streulicht keinen allzu großen Effekt auf eine Verbreiterung der Durchlaßkurve mit sich bringt.

In Fig. 3 ist eine Anordnung gezeigt, bei der das Filter 11 feststeht, vor dem Filter 11 aber eine Spiegelanordnung 14 in den Weg des Lichtbündels L eingebracht ist. Die Spiegelanordnung 14 ist ebenfalls wieder motorisch bewegbar. Dadurch, daß man den Spiegel verschwenkt, wird das Lichtbündel L in der einen Spiegellage im wesentlichen senkrecht zur Oberfläche des Filters 11 geführt, in der anderen Spiegellage trifft es unter dem Winkel α auf das Filter 11 auf. Dem Filter 11 ist eine Sammellinse 15 nachgeschaltet, die das gefilterte Lichtbündel L' auf den Detektor 4 fokussiert.

Sowohl in dem in Fig. 1 als auch in dem in Fig. 3 gezeigten Ausführungsbeispiel kann das Filter 11 bzw. der Spiegel über einen Galvanometermotor schwenkbar gelagert sein. Eine besonders bevorzugte Ausführungsform der Erfindung sieht aber eine Torsionsfederlagerung des Filters 11 bzw. des Spiegels vor, die im Resonanzbetrieb arbeitet. Derartige Anordnungen mit Spiegel sind als sogenannte «Festfrequenz-Resonanzscanner» im Handel erhältlich und machen Schwenkfrequenzen bis über 10 kHz möglich. Vorteilhafterweise wird hierbei das Filter bzw. der Spiegel im Vakuum gehalten, damit die Dämpfungseigenschaften der Luft ausgeschaltet werden.

Bei einer weiteren, hier nicht gezeigten Ausführungsform der Erfindung, sind mehrere Spiegel über den Umfang einer drehenden Trommel verteilt. Auch in diesem Fall wird das reflektierte Lichtbündel auf ein feststehendes Filter gerichtet, wobei es auf diesem eine sägezahnförmige Wanderung unter sägezahnförmiger Änderung des Winkels macht.

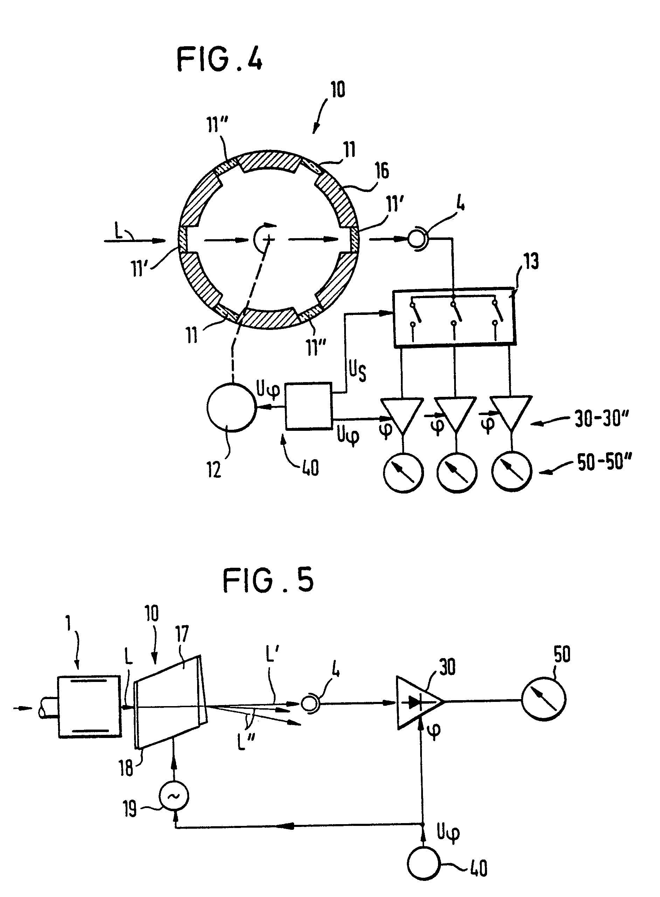

Bei der in Fig. 4 gezeigten Anordnung sind mehrere Filter 11, 11' 11'' in einem gemeisamen rotorförmigen Linsengehäuse 16 gehalten. Die Filter (-Paare) 11, 11' und 11'' weisen jeweils voneinander abweichende Durchlaßbereiche auf, so daß zum einen durch die Drehung des Gehäuses 16 jedes einzelne Filter (-Paar) 11, 11' und 11'' in seinem Durchlaßbereich entsprechend dem variierenden Auftreffwinkel verschoben wird und zum anderen nacheinander alle Filterpaare 11, 11' und 11'' in den Strahlengang zwischen Quelle 1 und Detektor 4 gebracht werden. Auf das jeweils zweite Filter kann selbstverständlich auch verzichtet werden.

Der Detektor 4 ist auf den Eingang eines Multiplexers 13 geführt, dessen Ausgänge mit drei Lock-in-Verstärkern 30 bis 30'' mit separaten Anzeigeelementen 50 bis 50'' versehen sind. Die Steueranordnung 40 steuert auch den Multiplexer 13 derart, daß je nach zugeordnetem Filter 11, 11', 11'' ein entsprechender Lock-in-Verstärker 30, 30' und 30'' angesteuert wird. Darüberhinaus wird das Phasensignal Uφ von der Steueranordnung 40 erzeugt und sowohl dem Motor 12 für die Filteranordnung 10, als auch den Lock-in-Verstärkern 30 bis 30' zugeführt.

Selbstverständlich kann ein Demultiplexer den Lock-in-Verstärkern nachgeschaltet werden, so daß man nur eine einzige Anzeigeanordnung benötigt. Vorteilhafterweise verwendet man aber eine der Kanalzahl entsprechende Anzahl von Lock-in-Verstärkern, da deren obere Grenzfrequenzen jeweils möglichst niedrig gewählt werden sollen.

In Fig. 5 wird eine weitere bevorzugte Ausführungsform der erfindungsgemäßen Anordnung gezeigt. Diese unterscheidet sich von der nach Fig. 1 dadurch, daß als Filteranordnung 10 ein elektrisch abstimmbares Filter verwendet wird. Derartige Filter bestehen aus einem TeO2-Kristall 17, in das über einen Ultraschallwandler 18 Scher-Wellen induziert werden, die durch das Kristall wandern. Dabei wird aufgrund des Bragg-Effektes eine Filterwirkung erzielt, deren Frequenz- (Wellenlängen-) lage von der induzierten Ultraschall-Frequenz abhängt. Der ausfallende Strahl L' ist also ein schmalbandiger Ausschnitt aus dem einfallenden Strahl L und auf den Detektor 4. Die Strahlen L'' werden nicht verwendet (andere bzw. keine Filterung). Da die Frequenzlage der Filteranordnung 10 von der Frequenz der induzierten Ultraschallwelle abhängt, ist zwischen den Phasengenerator 40 und den Ultraschallwandler 18 ein spannungsgesteuerter Oszillator (VCO) 19 geschaltet. Somit ist auch bei dieser Anordnung die Frequenzlage des analysierten Lichtstrahles L' der Ausgangsspannung Uφ des Phasengenerators 40 proportional.

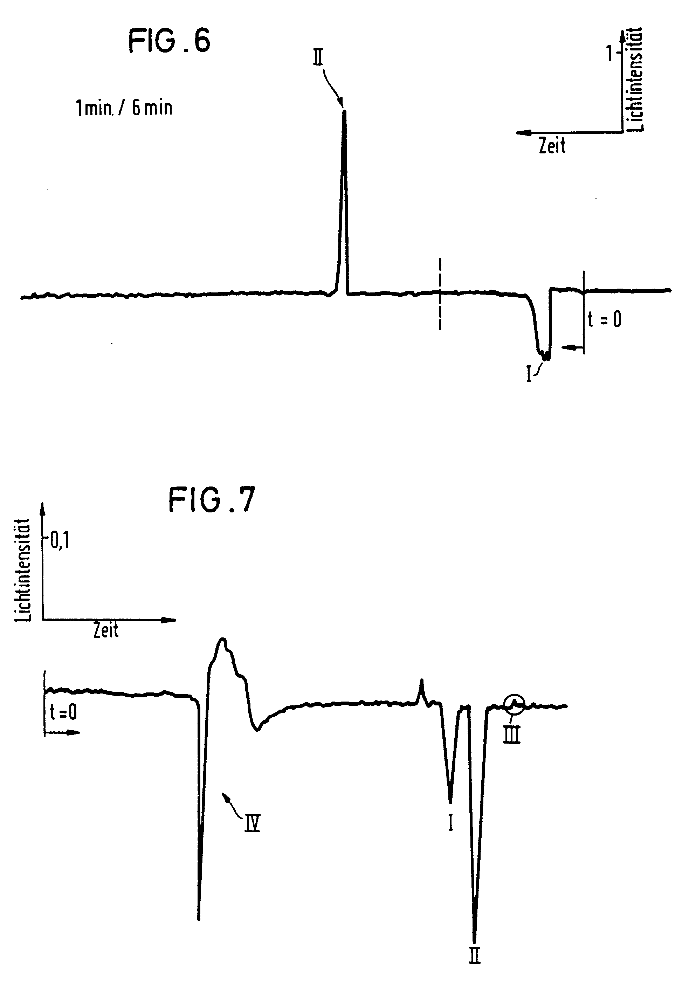

Im folgenden werden anhand der Fig. 6 und 7 Meßergebnisse gezeigt, die mit einer Anordnung, ähnlich der nach Fig. 1 gewonnen wurden.

Fig. 6 zeigt ein chlorspezifisches Chromatogramm (Kapillarsäule), bei dem das Filter 11 ein Interferenzfilter mit einer Halbwertsbreite von etwa 0, 1 nm war. Das Filter wurde mittels eines Elektromotors mit einer Oszillationsfrequenz von 7 Hz verkippt (höhere Frequenzen ergeben noch weitaus bessere Ergebnisse). Mit I ist der Lösungsmittel-peak bezeichnet, mit II der durch eine Menge von 40 ng 1, 3, 5-Trichlorbenzol erzeugte peak. Bemerkenswert ist hierbei auch, daß durch das erfindungsgemäße Verfahren bzw. die entsprechende Anordnung der «Nutzpeak» entgegengesetzt gerichtet ist zum Hintergrundspeak. Mit der strichlierten senkrechten Linie ist in Fig. 6 der rechte, mit langsamerem Papiervorschub aufgenommene Bereich vom linken, schneller aufgenommenem Bereich abgetrennt.

In Fig. 7 ist ein chlorspezifisches Chromatogramm (Kapillarsäule) von nur 2 ng Chlor (!) in Form von 1, 3, 5-Trichlorbenzol gezeigt (peak III), und zwaren neben einem $10^4$-fachen Überschuß an Kohlenstoff in Form von n-Dekan (peak I) sowie einem $10^4$-fachen Überschuß an Brom in Form von 1, 4-Dibromutan

(peak II). Dadurch, daß Fremdstoffe als negative peaks registriert werden, ergibt sich eine Selektivität von über $10^6$, d.h. absolute Spezifität. Beim peak IV handelt es sich um ein Signal, das durch ein kurzzeitiges Löschen des Plasmas (aufgrund eines Lösungsmittelüberschusses) und nachfolgendes Zünden entstanden ist. Weiterhin muß zu den Abbildungen bemerkt werden, daß die Lichtintensität in Fig. 6 mit der zehnfachen Verstärkung (siehe schematisiertes Koordinatensystem) gegenüber der nach Fig. 5 aufgezeichnet wurde.

Als Ionenchromatographie-Detektor kann man beispielsweise die analytische Säule mit $Li^+$-Ionen anstelle von $H^+$ oder $OH^-$-Ionen laden und die Lithiumemission des Eluats mit dem erfindungsgemäßen Verfahren messen. Ein solcher spektroskopischer Detektor ist wesentlich empfindlicher als der üblicherweise verwendete Leitfähigkeitsdetektor. Weiterhin kann man das erfindungsgemäße Verfahren als HPLC-Detektor verwenden, durch den alle Elemente wesentlich empfindlicher und selektiver als mit herkömmlichen UV-Detektoren erfaßt werden, solange sie nicht im Eluationsmedium anwesend sind.

**Patentansprüche**

1. Verfahren zur Selektivitätsverbesserung emissions-spektrometrischer Messungen, wobei aus dem zu untersuchenden Spektralbereich mittels Filteranordnungen oder dergleichen ein Spektralband herausgefiltert und einem Detektor zugeführt wird, dessen Ausgangssignal in einer Anzeige-/Registriereinrichtung angezeigt/registriert wird, dadurch gekennzeichnet, daß man eine Filteranordnung mit einer, zur Emissionslinie großen Bandbreite hinsichtlich ihres Durchlaßbereiches periodisch gegenüber dem zu untersuchenden Spektralbereich derart verschiebt (oder umgekehrt), daß das durch die Filteranordnung gelangende Spektralband über den zu untersuchenden Spektralbereich periodisch verschoben wird, und daß man das Detektorausgangssignal über einen phasenempfindlichen Gleichrichter (Lock-in-Verstärker) zur Anzeige bringt, dessen Phasenreferenzsignal der Verschiebung proportional ist.

2. Verfahren nach Anspruch 1, wobei Emissionsspektren (einschließlich Fluoreszenz- und Ramanspektren) mittels Anregung durch schmalbandige Strahlung untersucht werden, dadurch gekennzeichnet, daß man die Frequenzlage der Strahlung, insbesondere mittels Dopplerverschiebung durch periodische Lichtweglängenveränderung verschiebt.

3. Vorrichtung zur Selektivitätsverbesserung emissions-spektrometrischer Messungen, wobei aus dem zu untersuchenden Spektralbereich mittels Filteranordnungen (10) oder dergleichen ein schmales Spektralband ausgefiltert und einem Detektor (4) zugeführt wird, dessen Ausgangssignal in einer Anzeige-/Registriereinrichtung (50) angezeigt wird, gekennzeichnet durch eine abstimmbare Filteranordnung (10) oder eine abstimmbare Anordnung (20) zur Spektralverschiebung, sowie durch einen phasenempfindlichen Gleichrichter (Lock-in-Verstärker 30) und eine Steueranordnung (40), deren Aus-

gangssignal (Uφ) dem phasenempfindlichen Gleichrichter (30) als Phasensignal (φ) und der Filteranordnung (10) bzw. Spektralverschiebungsanordnung (20) als Abstimmsignal zugeführt wird, wobei der phasenempfindliche Gleichrichter (30) zwischen Detektor (4) und Anzeige-/Registriereinrichtung (50) angeordnet ist.

4. Vorrichtung nach Anspruch 3, dadurch gekennzeichnet, daß die Filteranordnung (10) ein optisches Filter (11), umfaßt, bei dem die Lage des Durchlassbereiches vom Lichteinfallswinkel (α) abhängig ist und daß Einrichtungen (12, 14) vorgesehen sind, um den Lichteinfallswinkel (α) periodisch zu verändern.

5. Vorrichtung nach Anspruch 4, dadurch gekennzeichnet, daß das Filter (11) mit einem Drehantrieb (12) gekoppelt ist, der das Filter um einen gewünschten Winkelbetrag (α) zum einfallenden Licht (L) dreht.

6. Vorrichtung nach Anspruch 4, dadurch gekennzeichnet, daß dem Filter (11) eine Spiegelanordnung (14) mit Drehantrieb derart vorgeschaltet ist, daß das einfallende Licht (L) unter einem, dem Drehwinkel (β) der Spiegelanordnung (14) proportionalen Winkel (α) auf das Filter (11) gerichtet wird.

7. Vorrichtung nach einem der Ansprüche 3 bis 6, dadurch gekennzeichnet, daß mehrere Filter (11, 11′, 11″) mit voneinander verschiedenen Durchlaßbereichen vorgesehen sind, die abwechselnd verwendbar und durchstimmbar sind, und eine Multiplexeranordnung (13) derart mit der Steueranordnung (40) verbunden und dem Detektor (4) nachgeschaltet ist, daß die Filter (11, 11′, 11″) bzw. der Detektor (4) nacheinander verschiedene Spektralbereiche abtasten, die getrennt angezeigt werden.

**Claims**

1. A method of improving the selectivity of emissionspectrometric measurements, in which method a spectral band is filtered by filter means or the like out of the spectral range under examination and is fed to a detector, the output signal of which is displayed or recorded in a display or recording means respectively, characterised in that a filter means having a large band width in relation to the emission line is periodically shifted in respect of its pass range in relation to the spectral range under examination (or vice versa) in such manner that the spectral band passing through the filter means is periodically shifted over the spectral range under examination, and the detector output signal is displayed by way of a phase-sensitive rectifier (lock-in amplifier) whose phase reference signal is proportional to the shift.

2. A method according to claim 1, in which emission spectra (including fluorescence and Raman spectra) are examined by excitation by narrow-band radiation, characterised in that the frequency position of the radiation is shifted, more particularly by means of Doppler shift by periodic light wavelength change.

3. Apparatus for improving the selectivity of emission-spectrometric measurements, in which method a narrow spectral band is filtered by filter means (10) or the like out of the spectral range under examination and is fed to a detector (4), the output signal of which is displayed in a display or recording means (50), characterised by a tunable filter means (10) or a tunable means (20) for spectral shift, and by a phase-sensitive rectifier (lock-in amplifier 30) and a control means (40), whose output signal (Uφ) is fed as a phase signal (φ) to the phase-sensitive rectifier (30) and as a tuning signal to the filter means (10) or spectral shift means (20), the phase-sensitive rectifier (30) being disposed between the detector (4) and the display or recording means (50).

4. Apparatus according to claim 3, characterised in that the filter means (10) comprises an optical filter (11), the position of the pass range being dependent upon the angle of incidence (α) of the light and means (12, 14) are provided to periodically change the angle of incidence (α) of the light.

5. Apparatus according to claim 4, characterised in that the filter (11) is coupled to a rotary drive (12) to rotate the filter through a required angle (α) to the incident light (L).

6. Apparatus according to claim 4, characterised in that the filter (11) is so preceded by a mirror arrangement (14) with a rotary drive that the incident light (L) is directed on to the filter (11) at an angle (α) proportional to the angle of rotation (β) of the mirror arrangement (14).

7. Apparatus according to any one of claims 3 to 6, characterised in that a plurality of filters (11, 11′, 11″) are provided with different pass ranges which are alternatively usable and tunable, and a multiplexer arrangement (13) is so connected to the control means (40) and after the detector (4) that the filters (11, 11′, 11″) and the detector (4) successively scan different spectral ranges which are displayed separately.

**Revendications**

1. Procédé pour améliorer la sélectivité de mesures de spectrométrie d'émission, dans lequel on filtre une bande spectrale à partir du domaine spectral à examiner au moyen d'un agencement de filtre ou analogue et on l'amène à un détecteur dont le signal de sortie est affiché/enregistré dans un dispositif d'affichage/enregistrement, caractérisé en ce qu'on déplace périodiquement, par rapport au domaine spectral à examiner (ou inversement), en ce qui concerne sa bande passante, un dispositif de filtre ayant une largeur de bande grande en regard de la raie d'émission, de façon que la bande spectrale passant à travers l'agencement de filtre se déplace périodiquement le long du domaine spectral à examiner, et qu'on amène le signal de sortie du détecteur au dispositif d'affichage par l'intermédiaire d'un redresseur sensible à la phase (amplificateur de blocage), dont le signal de référence de phase est proportionnel au déplacement.

2. Procédé selon la revendication 1, dans lequel des spectres d'émission (y compris des spectres de fluorescence et des spectres Raman) sont étudiés au moyen d'une excitation par un rayonnement à bande étroite, caractérisé en ce que la position en fréquence du rayonnement se déplace par changement périodique de la longueur du trajet lumineux, en particulier au moyen d'un déplacement Doppler.

3. Dispositif pour améliorer la sélectivité de mesures de spectrométrie d'émission, dans lequel on filtre une bande spectrale à partir du domaine spectral à examiner au moyen d'un agencement de filtre (10) ou analogue et on l'amène à un détecteur (4) dont le signal de sortie est affiché/entegistré dans un dispositif d'affichage/enregistrement (50), caractérisé par un agencement de filtre accordable (10) ou un agencement accordable (20) pour le déplacement spectral, ainsi que par un redresseur sensible à la phase (amplificateur de blocage 30) et un agencement de commande (40) dont le signal de commande (Uφ) est amené au redresseur sensible à la phase (30) en tant que signal de phase (φ) et à l'agencement de filtre (10) ou à l'agencement de déplacement spectral (20) en tant que signal d'accord, le redresseur sensible à la phase (30) étant disposé entre le détecteur (4) et le dispositif d'affichage/enregistrement (50).

4. Dispositif selon la revendication 3, caractérisé en ce que l'agencement de filtre (10) comprend un filtre optique (11) pour lequel la position de la bande passante est indépendante de l'angle d'incidence de la lumière (α) et que des moyens (12, 14) sont prévus pour modifier périodiquement l'angle d'incidence de la lumière (α).

5. Dispositif selon la revendication 4, caractérisé en ce que le filtre (11) est couplé à des moyens d'entraînement en rotation (12), qui font tourner le filtre d'une quantité angulaire voulue (α) par rapport à la lumière incidente (L).

6. Dispositif selon la revendication 4, caractérisé en ce qu'un agencement de miroir (14) avec entraînement en rotation est placé en amont du filtre (11) de telle sorte que la lumière incidente (L) soit dirigée sur le filtre (11) sous un angle (β) proportionnel à l'angle de rotation (α) de l'agencement de miroir.

7. Dispositif selon l'une des revendications 3 à 6, caractérisé en ce que plusieurs filtres de bandes passantes différentes les unes des autres sont prévues, qui sont utilisables alternativement, et qu'un agencement multiplexeur (13) est relié à l'agencement de commande (40) et en aval du détecteur (4) de telle sorte que les filtres (11, 11', 11'') et le détecteur (4) explorent successivement différents domaines spectraux qui sont affichés de façon séparée.

# FIG.1

# FIG.2

# FIG.3

# FIG.4

# FIG.5

# FIG.6

1min. / 6 min

# FIG.7